# EUROPEAN PATENT APPLICATION

(11) **EP 4 851 846 A1**
(43) Date of publication of application: **09.12.2026**
(21) Application number: 24921421.4
(22) Date of filing: 06.09.2024
(51) Int. Cl.: G06F 30/17, G06F 30/15

(54) **STEER-BY-WIRE VARIABLE-STEERING-RATIO DESIGN METHOD BASED ON GAUSSIAN REGRESSION, AND SYSTEM AND DEVICE**

(30) Priority: 02.02.2024 CN 202410147269
(71) Applicant: Bosch Huayu Steering Systems Co., Ltd., Shanghai 201821 (CN)
(72) Inventor: JU, Gaolin, Shanghai 201821 (CN); FU, Ying, Shanghai 201821 (CN); MA, Longfei, Shanghai 201821 (CN); LIANG, Dengyu, Shanghai 201821 (CN); GAO, Senqi, Shanghai 201821 (CN); HUANG, Gang, Shanghai 201821 (CN); WU, Jianjun, Shanghai 201821 (CN); ZHANG, Dan, Shanghai 201821 (CN)
(74) Representative: Cameron Intellectual Property Ltd
(86) International application number: PCT/CN2024/117546
(87) International publication number: WO 2025/161396

(57) **Abstract**

A steer-by-wire variable-steering-ratio design method based on Gaussian regression, and a system and a device. The method comprises: establishing a kinetic equation of a steer-by-wire system (101); on the basis of the kinetic equation, solving steering ratio curves at different vehicle speeds (102); optimizing each steering ratio curve, so as to locally minimize the total open-loop variance of the steering ratio curve, and obtaining steering ratio fitness parameters corresponding to a local optimal solution for each vehicle speed (103); using a Gaussian process to perform regression analysis on the steering ratio fitness parameters corresponding to each vehicle speed, so as to obtain a random variable index (104); performing Gaussian process kernel regression simulation on the random variable index, so as to obtain a nonlinear parameter model (105); and on the basis of the nonlinear parameter model, learning a global optimal solution of a steering ratio (106). The steer-by-wire variable-steering-ratio design method based on Gaussian regression improves the robustness and provides a stable and reliable steering ratio under various vehicle conditions, thereby improving the experience of drivers under various vehicle conditions.

## Description

The present application claims the right of priority of Chinese patent application No. 2024101472696 filed on February 2, 2024. The contents of the Chinese patent application are incorporated herein by reference in its entirety.

### TECHNICAL FIELD

The present disclosure relates to the technical field of automotive steer-by-wire systems, and particularly to a steer-by-wire variable-steering-ratio design method based on Gaussian regression, and a system and a device.

### BACKGROUND

In conventional mechanical steering systems, the steering ratio is fixed and cannot resolve the conflict between "steering ease" and "steering responsiveness". In contrast, a steer-by-wire system eliminates the mechanical connection between a steering wheel and road wheels, and can flexibly vary the steering ratio according to vehicle conditions so as to reduce driver steering effort, thereby improving vehicle handling stability.

At present, commonly used steer-by-wire variable-steering-ratio design methods are mainly based on a "constant-gain method" or a "genetic algorithm". However, the commonly used steer-by-wire variable-steering-ratio design methods have the following problems. The steer-by-wire variable-steering-ratio design method based on the "constant-gain method" is difficult to establish mathematical models for complex or nonlinear systems, and the steer-by-wire variable-steering-ratio design method based on the "genetic algorithm" is excessively dependent on the designer's experience and the quality of data samples. Neither the steer-by-wire variable-steering-ratio design method based on the "constant-gain method" nor the steer-by-wire variable-steering-ratio design method based on the "genetic algorithm" can provide a stable and reliable steering ratio under special operating conditions.

### SUMMARY

The technical problem to be solved in the present disclosure is for overcoming the above deficiencies in the prior art by providing a steer-by-wire variable-steering-ratio design method based on Gaussian regression, and a system and a device.

The present disclosure solves the above technical problem by the following technical solutions.

In a first aspect, a steer-by-wire variable-steering-ratio design method based on Gaussian regression is provided. The method comprises:
establishing a dynamic equation of a steer-by-wire system;
on the basis of the dynamic equation, solving steering ratio curves;
optimizing each steering ratio curve, so as to locally minimize the total open-loop variance of the steering ratio curve, and obtaining steering ratio fitness parameters corresponding to a local optimal solution for each vehicle speed;
using a Gaussian process to perform regression analysis on the steering ratio fitness parameters corresponding to each vehicle speed, so as to obtain a random variable index;
performing Gaussian process kernel regression simulation on the random variable index, so as to obtain a nonlinear parameter model; and
on the basis of the nonlinear parameter model, learning a global optimal solution of a steering ratio.

Optionally, establishing a dynamic equation of a steer-by-wire system comprises:
establishing the dynamic equation of the steer-by-wire system on the basis of a two-degree-of-freedom model;
wherein the dynamic equation is expressed as: $\left({k}_{f}+{k}_{r}\right) β + \frac{1}{u} \left({ak}_{f}-{bk}_{r}\right) {ω}_{r} - {k}_{f} θ = m \left(v′+{uω}_{r}\right) ;$ and $\left(a{k}_{f}-{bk}_{r}\right) β + \frac{1}{u} \left({a}^{2}{k}_{f}+{b}^{2}{k}_{r}\right) {ω}_{r} - {ak}_{f} θ = {I}_{z} {ω}_{r} ;$
wherein k_{f} is a cornering stiffness of a front axle, kᵣ is a cornering stiffness of a rear axle, β is a sideslip angle at a center of mass, u is a velocity component in an x-axis direction, *a* is a front axle distance, b is a rear axle distance, *ωᵣ* is a yaw rate, *θ* is a front-wheel steering angle, *m* is a vehicle mass, *v'* is a differential value of a vehicle driving speed, and *I_{z}* is a moment of inertia.

Optionally, on the basis of the dynamic equation, solving steering ratio curves comprises:
solving a steering ratio curve corresponding to the dynamic equation on the basis of a constant-gain method.

Optionally, solving a steering ratio curve corresponding to the dynamic equation on the basis of a constant-gain method comprises:
on the basis of the dynamic equation, obtaining a yaw-rate equation and a lateral-acceleration equation of the steer-by-wire system;
determining a ratio of the yaw-rate equation to a steering-wheel angle as a steady-state yaw-rate gain equation, and solving a first ideal steering ratio based on a yaw rate while keeping the steady-state yaw-rate gain equation constant;
determining a ratio of the lateral-acceleration equation to the steering-wheel angle as a steady-state lateral-acceleration gain equation, and solving a second ideal steering ratio of an ideal steering ratio based on a lateral acceleration while keeping the steady-state lateral-acceleration gain equation constant; and
on the basis of a weighted result of the first ideal steering ratio and the second ideal steering ratio, determining the steering ratio curve.

Optionally, the yaw-rate equation is expressed as:
${ω}_{r} = \frac{\left(a+b\right) θu {k}_{f} {k}_{r}}{{\left(a+b\right)}^{2} {k}_{f} {k}_{r} - {mu}^{2} \left(a{k}_{f}-b{k}_{r}\right)} ;$
the yaw-rate equation is substituted into a_{y} = *v'* + *uωᵣ,* and the lateral-acceleration equation is obtained as:
   ${a}_{y} = v ′ + u \frac{\left(a+b\right) θu {k}_{f} {k}_{r}}{{\left(a+b\right)}^{2} {k}_{f} {k}_{r} - {mu}^{2} \left(a{k}_{f}-b{k}_{r}\right)} ;$
the first ideal steering ratio is expressed as:
   ${I}_{w} = \frac{u / \left(a+b\right)}{\left(1+\frac{m}{{\left(a-b\right)}^{2}}\left(\frac{a}{{k}_{r}}-\frac{b}{{k}_{f}}\right){u}^{2}\right) {K}_{w}} ;$
the second ideal steering ratio is expressed as:
   ${I}_{a} = \frac{{u}^{2} / \left(a+b\right)}{\left(1+\frac{m}{{\left(a-b\right)}^{2}}\left(\frac{a}{{k}_{r}}-\frac{b}{{k}_{f}}\right){u}^{2}\right) {K}_{ay}} ;$
wherein *K_{w}* denotes a positive calibratable parameter representative of vehicle steering sensitivity, and *K_{ay}* denotes a positive calibratable parameter representative of vehicle driving stability.

Optionally, optimizing each steering ratio curve, so as to locally minimize the total open-loop variance of the steering ratio curve, and obtaining steering ratio fitness parameters corresponding to a local optimal solution comprises:
calculating a total open-loop variance equation of the steering ratio curve according to a dynamic total open-loop variance evaluation method; and
optimizing the steering ratio curve at each vehicle speed using a genetic algorithm with the total open-loop variance equation serving as a fitness function, so as to locally minimize the total open-loop variance thereof and obtain the steering ratio fitness parameters.

Optionally, the total open-loop variance equation is expressed as:
${E}_{r} = \sqrt{\frac{{ω}_{1} {J}_{e 1}^{2} + {ω}_{2} {J}_{e 2}^{2} + {ω}_{3} {J}_{b 1}^{2}}{{ω}_{1} + {ω}_{2} + {ω}_{3}}} ;$
wherein Jₑ₁ is a trajectory-tracking performance index, Jₑ₂ is a direction error index, J_{b1} is a three-item driver-burden index, ω₁ is a weighting coefficient of Jₑ₁, ω₂ is a weighting coefficient of Jₑ₂, and ω₃ is a weighting coefficient of J_{b1}; and Jₑ₂ is obtained on the basis of a radial vehicle driving speed and an X-axis component of the radial vehicle driving speed, and J_{b1} is evaluated on the basis of a heaviness degree of a steering wheel.

Optionally, using a Gaussian process to perform regression analysis on the steering ratio fitness parameters corresponding to each vehicle speed, so as to obtain a random variable index comprises:
using a Gaussian process prior to perform regression analysis on the steering ratio fitness parameters corresponding to each vehicle speed, wherein a random vector X = [x₁, x₂ ... , xₙ] is assumed to follow a multivariate Gaussian distribution X~N(µ, Σ), wherein X₁ = [*x*₁, ..., *xₘ*] is an observed vector, and X₂ = [*x*_{*m+*1}*,* ... , *xₙ*] is the random variable index, such that $X = \left(\begin{matrix}{X}_{1} \\ {X}_{2}\end{matrix}\right)$, thereby obtaining: $μ = \left(\begin{matrix}{μ}_{1} \\ {μ}_{2}\end{matrix}\right) , Σ = \left[\begin{matrix}Σ 11 & Σ 12 \\ Σ 21 & Σ 22\end{matrix}\right]$, wherein n is a feature dimension in a time sequence,x₁, x₂ ... , xₙ are feature samples corresponding to respective dimensions, X follows a normal distribution, µ is a mean vector, and Σ is a covariance matrix; and
performing posterior distribution estimation on X₁ and X₂ : µ_{2|1} = *µ*₂ + Σ21Σ11(X₁ - *µ*₁), ∑2|1 = Σ22 - Σ21Σ11Σ12, and obtaining a probability of X₂ and a predicted probability matrix.

Optionally, performing Gaussian process kernel regression simulation on the random variable index, so as to obtain a nonlinear parameter model comprises:
resampling X₂, and performing Gaussian process kernel regression simulation on random variables of the resampled X₂, so as to obtain the nonlinear parameter model; wherein equations of a radial basis function and X in a Gaussian process kernel selection are:
$k = {σ}^{2} exp \left(-\frac{{\left|\left|{t}_{i}-{t}_{j}\right|\right|}^{2}}{2 {l}^{2}}\right) , X = μ + U \sqrt{S} y$, wherein *tᵢ* and *tⱼ* are dimensional indices in a time sequence, U and S are obtained from the covariance matrix Σ by singular value decomposition, and y is a vector composed of n random variables generated from Σ.

In a second aspect, a steer-by-wire variable-steering-ratio design system based on Gaussian regression is provided. The system comprises:
an establishing module configured to establish a dynamic equation of a steer-by-wire system;
a curve solving module configured to, on the basis of the dynamic equation, solve steering ratio curves;
a fitness-parameter calculating module configured to optimize each steering ratio curve so as to locally minimize the total open-loop variance of the steering ratio curve, and obtaining steering ratio fitness parameters corresponding to a local optimal solution for each vehicle speed;
an index calculating module configured to use a Gaussian process to perform regression analysis on the steering ratio fitness parameters corresponding to each vehicle speed, so as to obtain a random variable index;
a model calculating module configured to perform Gaussian process kernel regression simulation on the random variable index, so as to obtain a nonlinear parameter model; and
an optimal-solution solving module configured to, on the basis of the nonlinear parameter model, learn a global optimal solution of a steering ratio.

In a third aspect, an electronic device is provided. The electronic device comprises a memory, a processor, and a computer program stored in the memory and configured to run on the processor, wherein the computer program, when being executed by the processor, causes the processor to implement the steer-by-wire variable-steering-ratio design method based on Gaussian regression according to any one of the examples of the first aspect.

In a fourth aspect, a computer-readable storage medium having a computer program stored thereon is provided. The computer program, when being executed by a processor, causes the processor to implement the steer-by-wire variable-steering-ratio design method based on Gaussian regression according to any one of the examples of the first aspect.

In a fifth aspect, a computer program product is provided. The computer program product comprises a computer program that, when being executed by a processor, causes the processor to implement the steer-by-wire variable-steering-ratio design method based on Gaussian regression according to any one of the examples of the first aspect.

Based on common knowledge in the art, the above preferred conditions can be combined arbitrarily to obtain preferred examples of the present disclosure.

The positive and progressive effects of the present disclosure are as follows: In the present disclosure, the steer-by-wire variable-steering-ratio design method based on Gaussian regression improves the robustness and provides a stable and reliable steering ratio under various vehicle conditions, thereby improving the experience of drivers under various vehicle conditions.

### BRIEF DESCRIPTION OF THE DRAWINGS

FIG. 1 is a flowchart of a steer-by-wire variable-steering-ratio design method based on Gaussian regression according to an exemplary example of the present disclosure;
FIG. 2 is a step flowchart of step 102 in FIG. 1;
FIG. 3 is a step flowchart of step 103 in FIG. 1;
FIG. 4 is a diagram of control principle according to an exemplary example of the present disclosure;
FIG. 5 is a comparison diagram of variable steering ratio curves according to an exemplary example of the present disclosure;
FIG. 6 is a comparison diagram of vehicle yaw-rate curves according to an exemplary example of the present disclosure;
FIG. 7 is a schematic diagram of modules of a steer-by-wire variable-steering-ratio design system based on Gaussian regression according to an exemplary example of the present disclosure; and
FIG. 8 is a schematic structural diagram of an electronic device according to an exemplary example of the present disclosure.

### DETAILED DESCRIPTION OF THE PREFERRED EMBODIMENT

The present disclosure is further illustrated below by way of examples, but is not thus limited within the scope of the examples.

In the examples of the present disclosure, prefixes such as "first" and "second" are used merely to distinguish different descriptive objects and do not limit the position, order, priority, quantity, or content of the described objects. The use of prefixes such as ordinal numbers to distinguish descriptive objects in the examples of the present disclosure does not constitute a limitation on the described objects. The description of the described objects shall refer to the contextual description in the claims or examples, and the use of such prefixes should not constitute an unnecessary limitation. In addition, in the description of the examples, "a plurality of" means two or more, unless otherwise stated.

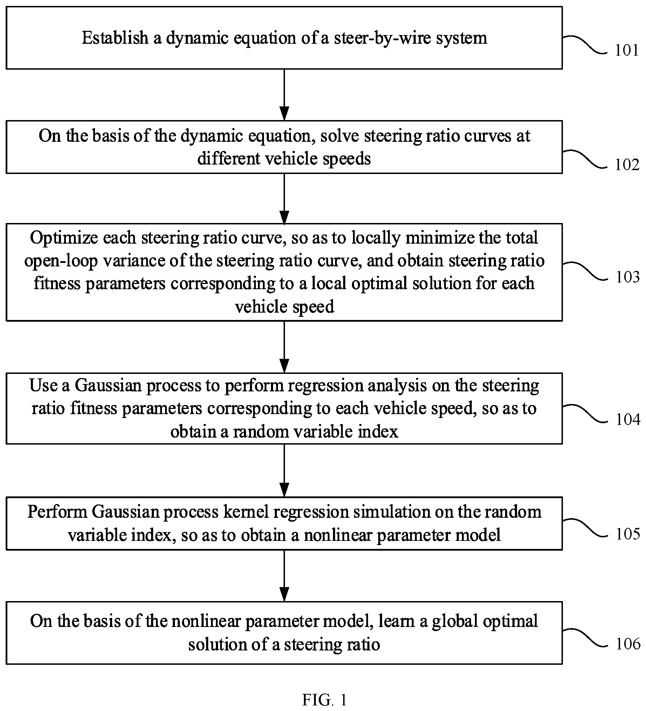

FIG. 1 is a flowchart of a steer-by-wire variable-steering-ratio design method based on Gaussian regression according to an exemplary example of the present disclosure. The method comprises the following steps.

In step 101, a dynamic equation of a steer-by-wire system is established.

The steer-by-wire system of a vehicle is mainly composed of a steering-wheel module, a front-wheel steering module, a main controller, etc.

In step 102, on the basis of the dynamic equation, steering ratio curves are solved.

The steering ratio curves may be steering ratio curves at different vehicle speeds. The number of vehicle speeds corresponds to the number of steering ratio curves, and may be set according to actual requirements.

It should be noted that the steering ratio curve represents a correspondence relationship between a steering ratio and parameters such as a cornering stiffness of a front axle, a cornering stiffness of a vehicle rear axle, a velocity component in an x-axis direction, a front axle distance, a rear axle distance, and a vehicle mass. The steering ratio curve is not limited to being represented in the form of a curve, and may also be represented in the form of an equation.

In step 103, each steering ratio curve is optimized, so as to locally minimize the total open-loop variance of the steering ratio curve, and steering ratio fitness parameters corresponding to a local optimal solution for each vehicle speed are obtained.

Locally minimizing the total open-loop variance of the steering ratio curve enables steering ratio fitness parameters with high robustness to be obtained, thereby improving handling stability. The steering ratio fitness parameters are in a range of [0, 1].

In step 104, a Gaussian process is used to perform regression analysis on the steering ratio fitness parameters corresponding to each vehicle speed, so as to obtain a random variable index.

In step 105, Gaussian process kernel regression simulation is performed on the random variable index, so as to obtain a nonlinear parameter model.

In step 106, on the basis of the nonlinear parameter model, a global optimal solution of a steering ratio is learned.

In an example, all inputs required for variable-steering-ratio design can be obtained on the basis of a two-degree-of-freedom model. In step 101, the dynamic equation of the steer-by-wire system is established on the basis of the two-degree-of-freedom model. In other implementations, the dynamic equation of the steer-by-wire system may also be established by using other models.

The dynamic equation of the two-degree-of-freedom model is expressed as:
$\left({k}_{f}+{k}_{r}\right) β + \frac{1}{u} \left({ak}_{f}-{bk}_{r}\right) {ω}_{r} - {k}_{f} θ = m \left(v′+{uω}_{r}\right) ;$ and
$\left(a{k}_{f}-{bk}_{r}\right) β + \frac{1}{u} \left({a}^{2}{k}_{f}+{b}^{2}{k}_{r}\right) {ω}_{r} - {ak}_{f} θ = {I}_{z} {ω}_{r} ;$
wherein k_{f} is a cornering stiffness of a vehicle front axle, **k**ᵣ is a cornering stiffness of a vehicle rear axle, β is a sideslip angle at a center of mass, *u* is a velocity component in an x-axis direction, *a* is a front axle distance, b is a rear axle distance, *ωᵣ* is a yaw rate, *θ* is a front-wheel steering angle, *m* is a vehicle mass, *v'* is a differential value of a vehicle driving speed v, and *I_{z}* is a moment of inertia.

In an example, in step 102, a steering ratio curve corresponding to the dynamic equation is solved on the basis of a constant-gain method.

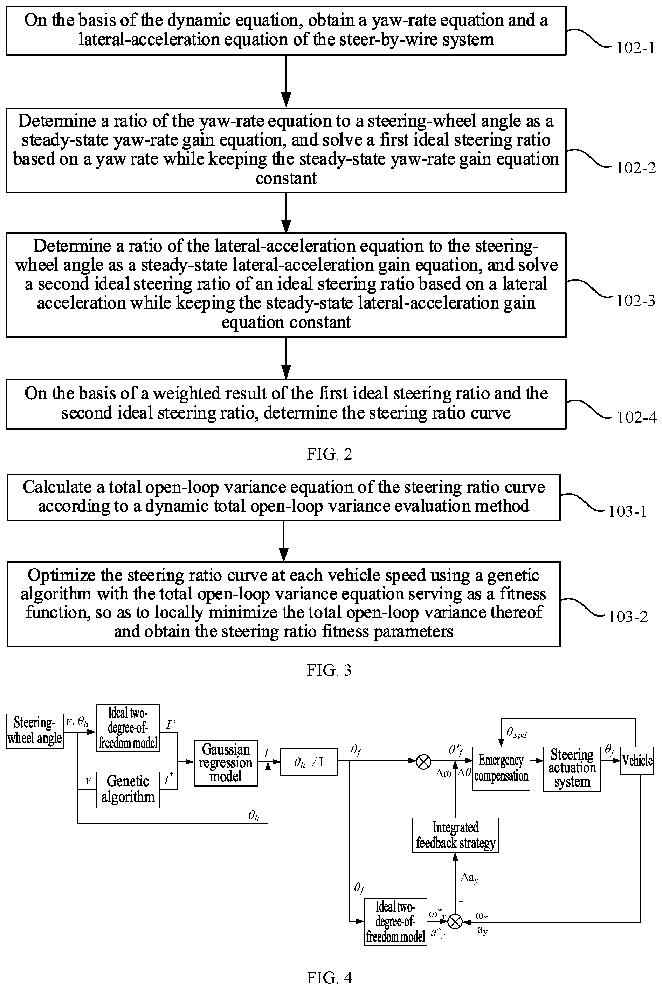

An implementation of solving the steering ratio curve will be described below. Referring to FIG. 2, solving a steering ratio curve corresponding to the dynamic equation on the basis of a constant-gain method comprise the following steps.

In step 102-1, on the basis of the dynamic equation, a yaw-rate equation and a lateral-acceleration equation of the steer-by-wire system are obtained.

The yaw-rate equation of the steer-by-wire system obtained through simplification of the dynamic equation is expressed as:
${ω}_{r} = \frac{\left(a+b\right) θu {k}_{f} {k}_{r}}{{\left(a+b\right)}^{2} {k}_{f} {k}_{r} - {mu}^{2} \left(a{k}_{f}-b{k}_{r}\right)} ;$

In this example, a steady-state lateral-acceleration gain equation is derived from the lateral acceleration, and a steering ratio curve is then derived from a control objective that both the yaw-rate gain equation and the steady-state lateral-acceleration gain equation remain constant. Accordingly, the yaw-rate equation is substituted into the equation a_{y} = *v'* + *uωᵣ,* so as to obtain the lateral-acceleration equation:
${a}_{y} = v ′ + u \frac{\left(a+b\right) θu {k}_{f} {k}_{r}}{{\left(a+b\right)}^{2} {k}_{f} {k}_{r} - {mu}^{2} \left(a{k}_{f}-b{k}_{r}\right)} .$

In step 102-2, a ratio of the yaw-rate equation to a steering-wheel angle is determined as a steady-state yaw-rate gain equation, and a first ideal steering ratio based on a yaw rate is solved while keeping the steady-state yaw-rate gain equation constant.

The steady-state yaw-rate gain equation may be expressed as:
${G}_{h} = {ω}_{r} / {θ}_{h} ;$
wherein Gₕ is the steady-state yaw-rate gain equation; and *θₕ* is a steering-wheel angle.

On the basis of the two-degree-of-freedom model, a gain from the front-wheel steering angle *θ* to the yaw rate can be obtained as:
${G}_{f} = {ω}_{r} / θ ;$
since the first ideal steering ratio based on the yaw rate is *I_{w}* = G_{f}/Gₕ;
the steady-state yaw-rate gain equation can be transformed into:
   ${G}_{h} = \frac{{G}_{f}}{{I}_{w}} = \frac{u / \left(a+b\right)}{\left(1+\frac{m}{{\left(a-b\right)}^{2}}\left(\frac{a}{{k}_{r}}-\frac{b}{{k}_{f}}\right){u}^{2}\right) {I}_{w}} ;$
by keeping the steady-state yaw-rate gain equation Gₕ = K_{w} constant, the first ideal steering ratio based on the yaw rate can be expressed:
   ${I}_{w} = \frac{u / \left(a+b\right)}{\left(1+\frac{m}{{\left(a-b\right)}^{2}}\left(\frac{a}{{k}_{r}}-\frac{b}{{k}_{f}}\right){u}^{2}\right) {K}_{w}} ;$
wherein *K_{w}* is a positive calibratable parameter representative of vehicle steering sensitivity, and has a value in a range of [0.16, 0.65].

In step 102-3, a ratio of the lateral-acceleration equation to the steering-wheel angle is determined as a steady-state lateral-acceleration gain equation, and a second ideal steering ratio of an ideal steering ratio based on a lateral acceleration is solved while keeping the steady-state lateral-acceleration gain equation constant.

The steady-state lateral-acceleration gain equation may be expressed as:
${G}_{ay} = {a}_{y} / {θ}_{h} ;$

Under a steady-state condition, *v'* in a_{y} = *v'* + *uωᵣ* is set to 0, and the steady-state lateral-acceleration gain equation may further be expressed as:
${G}_{ay} = \frac{{uω}_{r}}{{θ}_{r}} = {uG}_{h} = \frac{{u}^{2} / \left(a+b\right)}{\left(1+\frac{m}{{\left(a-b\right)}^{2}}\left(\frac{a}{{k}_{r}}-\frac{b}{{k}_{f}}\right){u}^{2}\right) {I}_{w}} ;$

A first ideal steering ratio based on the lateral acceleration is given by *Iₐ* = G_{f}/G_{ay}, wherein *Iₐ* and *I_{w}* respectively represent steering ratios under a steady-state yaw-rate condition and a steady-state lateral-acceleration condition, and both may be regarded as steering ratios I. *Iₐ* is used herein merely to distinguish the steering ratios under the two conditions. Accordingly, *Iₐ* is used in place of *I_{w}* for calculation.

By keeping the steady-state lateral-acceleration gain equation G_{ay} = *K_{ay}* constant, the second ideal steering ratio based on the lateral acceleration may be expressed as:
${I}_{a} = \frac{{u}^{2} / \left(a+b\right)}{\left(1+\frac{m}{{\left(a-b\right)}^{2}}\left(\frac{a}{{k}_{r}}-\frac{b}{{k}_{f}}\right){u}^{2}\right) {K}_{w}} ;$
wherein *K_{ay}* is a positive calibratable parameter representative of vehicle driving stability, and has a value in a range of [4, 8].

In step 102-4, on the basis of a weighted result of the first ideal steering ratio and the second ideal steering ratio, the steering ratio curve is determined.

The weighted results are expressed as:
$I = {C}_{w} ⋅ {I}_{w} + {C}_{a} ⋅ {I}_{a} ;$
${C}_{w} + {C}_{a} = 1 ;$
wherein *C_{w}* is a weighting coefficient of the first ideal steering ratio, and *C*ₐ is a weighting coefficient of the second ideal steering ratio.
*C_{w}* and *C*ₐ may be set according to actual requirements, that is, whether greater emphasis is placed on yaw-rate stability or on lateral-acceleration stability depends on the preferences of calibration personnel and users. For example, *C_{w}* has a value in a range of [25%, 35%].

In an example, referring to FIG. 3, step 103 comprises the following steps.

In step 103-1, a total open-loop variance equation of the steering ratio curve is calculated according to a dynamic total open-loop variance evaluation method.

The total open-loop variance equation is expressed as:
${E}_{r} = \sqrt{\frac{{ω}_{1} {J}_{e 1}^{2} + {ω}_{2} {J}_{e 2}^{2} + {ω}_{3} {J}_{b 1}^{2}}{{ω}_{1} + {ω}_{2} + {ω}_{3}}} ;$
wherein Jₑ₁ is a trajectory-tracking performance index, Jₑ₂ is a direction error index, J_{b1} is a three-item driver-burden index, ω₁ is a weighting coefficient of Jₑ₁, ω₂ is a weighting coefficient of Jₑ₂, and ω₃ is a weighting coefficient of J_{b1}; and Jₑ₂ is obtained on the basis of a radial vehicle driving speed and an X-axis component of the radial vehicle driving speed, and J_{b1} is evaluated on the basis of a heaviness degree of a steering wheel. ω₃ is greater than or equal to 50%. The value ranges of the weighting coefficients are all [0, 1).

The total open-loop variance equation is obtained by performing an open-loop calculation on an overall variance, whereby a variance mean value can be solved.

In this example, a dynamic filtering model calculation is performed on the basis of the above three indicators of the total open-loop variance, such that an optimized steering ratio curve can be fitted.

In step 103-2, the steering ratio curve at each vehicle speed is optimized using a genetic algorithm with the total open-loop variance equation serving as a fitness function, so as to locally minimize the total open-loop variance thereof and obtain the steering ratio fitness parameters.

Locally minimizing the total open-loop variance of the steering ratio curve enables steering ratio fitness parameters with high robustness to be obtained, thereby improving handling stability.

In an example, step 104 comprises:
In step 104-1, a Gaussian process prior is used to perform regression analysis on the steering ratio fitness parameters corresponding to each vehicle speed, wherein a random vector X = [x₁, x₂ ... , xₙ] is assumed to follow a multivariate Gaussian distribution X~N(µ, Σ), wherein X₁ = [*x*₁, *... , xₘ*] is an observed vector (observed index), and X₂ = [*x*_{*m+*1}*,* ... , *xₙ*] is the random variable index (unknown variable), such that $X = \left(\begin{matrix}{X}_{1} \\ {X}_{2}\end{matrix}\right)$*,* thereby obtaining: $μ = \left(\begin{matrix}{μ}_{1} \\ {μ}_{2}\end{matrix}\right) , Σ = \left[\begin{matrix}Σ 11 & Σ 12 \\ Σ 21 & Σ 22\end{matrix}\right]$ , wherein n is a feature dimension in a time sequence, x₁, x₂ ... , xₙ are feature samples corresponding to respective dimensions, X follows a normal distribution, µ is a mean vector, and Σ is a covariance matrix.

The random variable index refers to a variable coefficient. Specifically, one hundred values are selected from the variable steering ratio curve, with the values being selected at a fixed step size. The mean vector represents the average value of each feature in a data set, wherein each element corresponds to the mean value of a respective feature.

In step 104-2, posterior distribution estimation is performed on X₁ and X₂: µ_{2|1} = *µ*₂ + ∑21∑11(X₁ - *µ*₁), Σ2|1 = Σ22 - Σ21Σ11Σ12, and a probability of X₂ and a predicted probability matrix are obtained.

In an example, step 105 comprises: resampling X₂, and performing Gaussian process kernel regression simulation on random variables of the resampled X₂, so as to obtain the nonlinear parameter model and model output samples; equations of a radial basis function and Xₒ in a Gaussian process kernel selection are:
$k = {σ}^{2} exp \left(-\frac{{\left|\left|{t}_{i}-{t}_{j}\right|\right|}^{2}}{2 {l}^{2}}\right) , {X}_{o} = μ + U \sqrt{S} y ;$
wherein *tᵢ* and *tⱼ* are dimensional indices in a time sequence, U and S are obtained from the covariance matrix Σ by singular value decomposition, y is a vector composed of n random variables generated from Σ, and σ is a calibratable constant parameter.

FIG. 4 is a diagram of control principle according to an exemplary example of the present disclosure. On the basis of an ideal two-degree-of-freedom model, a steering ratio I' calculated by the ideal two-degree-of-freedom model is obtained. Steering ratio fitness parameters obtained on the basis of a genetic algorithm is used to derive a steering ratio I* calculated by the genetic algorithm. I' and I* are input into a Gaussian regression model to obtain an optimal steering ratio I. A front-wheel steering angle *θ_{f}* and a front-wheel steering-angle compensation value *θ*_{f}* are further obtained. *θ_{f}* is input into the ideal two-degree-of-freedom model to obtain an ideal yaw rate *ω**ᵣ and an ideal lateral acceleration *a***_{y}.* Subsequently, on the basis of ω*ᵣ, *a*_{y},* an actual yaw rate ωᵣ, and an actual lateral acceleration a_{y}, and on the basis of an integrated feedback strategy, Δω and Δ*θ* are obtained. Moreover, vehicle control is performed in combination with an actual front-wheel steering angle *θ_{spd}* of the vehicle. The integrated compensation strategy is used to perform closed-loop control on relevant vehicle signals. For example, PID control is performed on the yaw rate to obtain a compensation angle for superimposition.

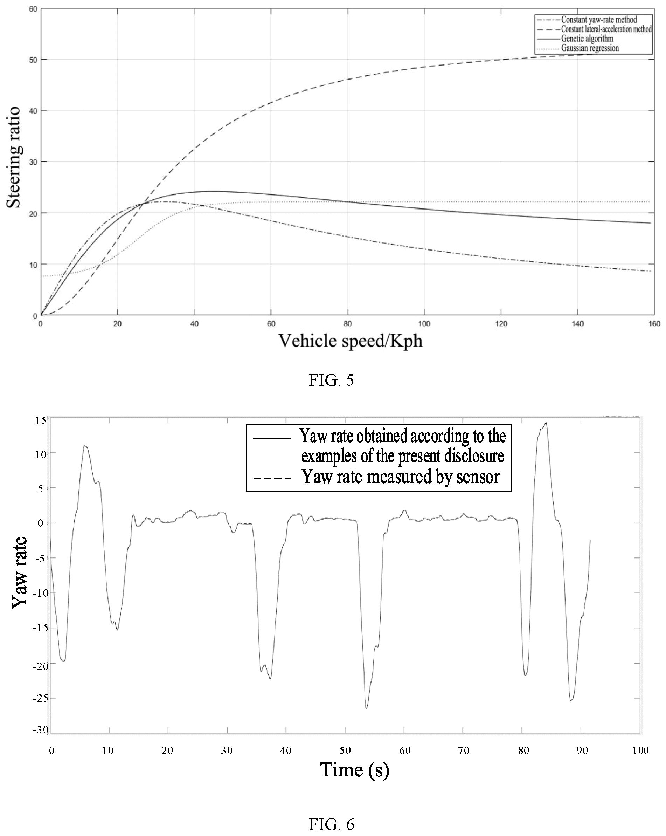

FIG. 5 illustrates a comparison diagram of steering ratio curves obtained by different methods. As can be seen, as compared with steering ratio curves obtained on the basis of a constant yaw-rate method, a constant lateral-acceleration method, and a genetic algorithm, the steering ratio curve obtained by Gaussian regression according to the examples of the present disclosure tends to be closer to an ideal value at higher vehicle speeds and exhibits better stability, thereby demonstrating the reliability of the algorithm of the present examples.

FIG. 6 illustrates a comparison diagram of a yaw-rate curve obtained according to the examples of the present disclosure and a yaw-rate curve measured by a sensor. As can be seen, the two curves are highly similar, indicating that the algorithm according to the present examples has high accuracy and reliability. Corresponding to the foregoing examples of the steer-by-wire variable-steering-ratio design method based on Gaussian regression, the present disclosure further provides an example of a steer-by-wire variable-steering-ratio design system based on Gaussian regression.

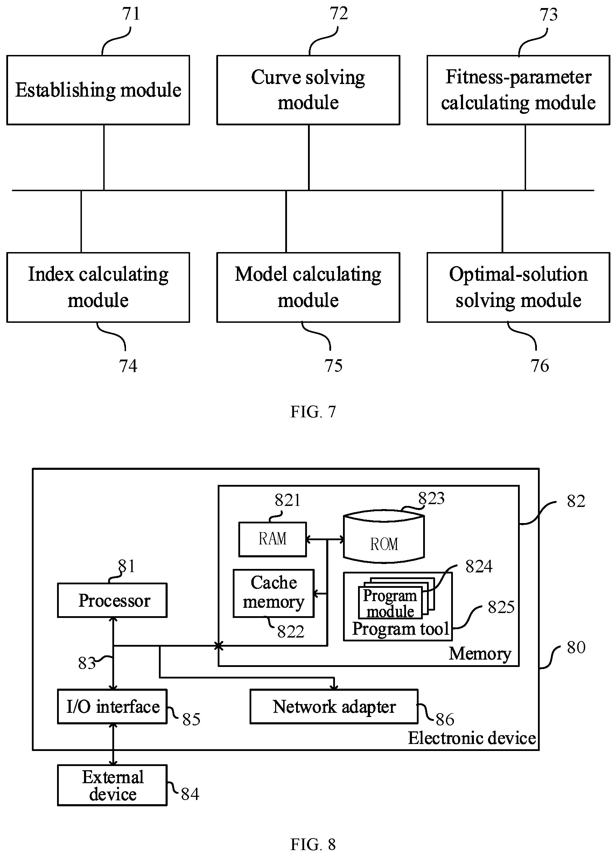

FIG. 7 is a schematic diagram of modules of a steer-by-wire variable-steering-ratio design system based on Gaussian regression according to an exemplary example of the present disclosure. The system comprises:
an establishing module 71 configured to establish a dynamic equation of a steer-by-wire system;
a curve solving module 72 configured to, on the basis of the dynamic equation, solve steering ratio curves;
a fitness-parameter calculating module 73 configured to optimize each steering ratio curve so as to locally minimize the total open-loop variance of the steering ratio curve, and to obtain steering ratio fitness parameters corresponding to a local optimal solution for each vehicle speed;
an index calculating module 74 configured to use a Gaussian process to perform regression analysis on the steering ratio fitness parameters corresponding to each vehicle speed, so as to obtain a random variable index;
a model calculating module 75 configured to perform Gaussian process kernel regression simulation on the random variable index, so as to obtain a nonlinear parameter model; and
an optimal-solution solving module 76 configured to, on the basis of the nonlinear parameter model, learn a global optimal solution of a steering ratio.

Optionally, the establishing module is specifically configured to:
establish the dynamic equation of the steer-by-wire system on the basis of a two-degree-of-freedom model;
wherein the dynamic equation is expressed as:
   $\left({k}_{f}+{k}_{r}\right) β + \frac{1}{u} \left({ak}_{f}-{bk}_{r}\right) {ω}_{r} - {k}_{f} θ = m \left(v′+{uω}_{r}\right) ;$
   $\left(a{k}_{f}-{bk}_{r}\right) β + \frac{1}{u} \left({a}^{2}{k}_{f}+{b}^{2}{k}_{r}\right) {ω}_{r} - {ak}_{f} θ = {I}_{z} {ω}_{r} ;$
wherein k_{f} is a cornering stiffness of a front axle, kᵣ is a cornering stiffness of a rear axle, β is a sideslip angle at a center of mass, *u* is a velocity component in an x-axis direction, *a* is a front axle distance, b is a rear axle distance, *ωᵣ* is a yaw rate, *θ* is a front-wheel steering angle, m is a vehicle mass, *v'* is a differential value of a vehicle driving speed, and *I_{z}* is a moment of inertia.

Optionally, the curve solving module is specifically configured to:
solve a steering ratio curve corresponding to the dynamic equation on the basis of a constant-gain method.

Optionally, the curve solving module is specifically configured to:
on the basis of the dynamic equation, obtain a yaw-rate equation and a lateral-acceleration equation of the steer-by-wire system;
determine a ratio of the yaw-rate equation to a steering-wheel angle as a steady-state yaw-rate gain equation, and solve a first ideal steering ratio based on a yaw rate while keeping the steady-state yaw-rate gain equation constant;
determine a ratio of the lateral-acceleration equation to the steering-wheel angle as a steady-state lateral-acceleration gain equation, and solve a second ideal steering ratio of an ideal steering ratio based on a lateral acceleration while keeping the steady-state lateral-acceleration gain equation constant; and
on the basis of a weighted result of the first ideal steering ratio and the second ideal steering ratio, determine the steering ratio curve.

Optionally, the yaw-rate equation is expressed as:
${ω}_{r} = \frac{\left(a+b\right) θu {k}_{f} {k}_{r}}{{\left(a+b\right)}^{2} {k}_{f} {k}_{r} - {mu}^{2} \left(a{k}_{f}-b{k}_{r}\right)} ;$
the yaw-rate equation is substituted into a_{y} *= v' + uωᵣ,* and the lateral-acceleration equation is obtained as:
   ${a}_{y} = v ′ + u \frac{\left(a+b\right) θu {k}_{f} {k}_{r}}{{\left(a+b\right)}^{2} {k}_{f} {k}_{r} - {mu}^{2} \left(a{k}_{f}-b{k}_{r}\right)} ;$
the first ideal steering ratio is expressed as:
   ${I}_{w} = \frac{u / \left(a+b\right)}{\left(1+\frac{m}{{\left(a-b\right)}^{2}}\left(\frac{a}{{k}_{r}}-\frac{b}{{k}_{f}}\right){u}^{2}\right) {K}_{w}} ;$
the second ideal steering ratio is expressed as:
   ${I}_{a} = \frac{{u}^{2} / \left(a+b\right)}{\left(1+\frac{m}{{\left(a-b\right)}^{2}}\left(\frac{a}{{k}_{r}}-\frac{b}{{k}_{f}}\right){u}^{2}\right) {K}_{ay}} ;$
wherein *K_{w}* denotes a positive calibratable parameter representative of vehicle steering sensitivity, and *K_{ay}* denotes a positive calibratable parameter representative of vehicle driving stability.

Optionally, the fitness-parameter calculating module is specifically configured to:
calculate a total open-loop variance equation of the steering ratio curve according to a dynamic total open-loop variance evaluation method; and
optimize the steering ratio curve at each vehicle speed using a genetic algorithm with the total open-loop variance equation serving as a fitness function, so as to locally minimize the total open-loop variance thereof and obtain the steering ratio fitness parameters.

Optionally, the total open-loop variance equation is expressed as:
${E}_{r} = \sqrt{\frac{{ω}_{1} {J}_{e 1}^{2} + {ω}_{2} {J}_{e 2}^{2} + {ω}_{3} {J}_{b 1}^{2}}{{ω}_{1} + {ω}_{2} + {ω}_{3}}} ;$
wherein Jₑ₁ is a trajectory-tracking performance index, Jₑ₂ is a direction error index, J₃₁ is a three-item driver-burden index, ω₁ is a weighting coefficient of Jₑ₁, ω₂ is a weighting coefficient of Jₑ₂, and ω₃ is a weighting coefficient of J_{b1}; and Jₑ₂ is obtained on the basis of a radial vehicle driving speed and an X-axis component of the radial vehicle driving speed, and J_{b1} is evaluated on the basis of a heaviness degree of a steering wheel.

Optionally, the index calculating module is specifically configured to:
use a Gaussian process prior to perform regression analysis on the steering ratio fitness parameters corresponding to each vehicle speed, wherein a random vector X = [x₁, x₂ ... , xₙ] is assumed to follow a multivariate Gaussian distribution X~N(µ, Σ), wherein X₁ = [*x*₁*, ... , xₘ*] is an observed vector, and X₂ = [*x*_{*m+*1}, ... , *xₙ*] is the random variable index, such that $X = \left(\begin{matrix}{X}_{1} \\ {X}_{2}\end{matrix}\right)$, thereby obtaining: $μ = \left(\begin{matrix}{μ}_{1} \\ {μ}_{2}\end{matrix}\right) , Σ = \left[\begin{matrix}Σ 11 & Σ 12 \\ Σ 21 & Σ 22\end{matrix}\right]$, wherein n is a feature dimension in a time sequence, x₁, x₂ ..., xₙ are feature samples corresponding to respective dimensions, X follows a normal distribution, µ is a mean vector, and Σ is a covariance matrix; and
perform posterior distribution estimation on X₁ and X₂ : µ_{2|1} = *µ*₂ + Σ21Σ11(X₁ - *µ*₁), Σ2|1 = Σ22 - Σ21Σ11Σ12, and obtain a probability of X₂ and a predicted probability matrix.

Optionally, the model calculating module is specifically configured to:
resample X₂, and performing Gaussian process kernel regression simulation on random variables of the resampled X₂, so as to obtain the nonlinear parameter model; wherein equations of a radial basis function and X in a Gaussian process kernel selection are:
$k = {σ}^{2} exp \left(-\frac{{\left|\left|{t}_{i}-{t}_{j}\right|\right|}^{2}}{2 {l}^{2}}\right) , X = μ + U \sqrt{S} y$, , wherein *tᵢ* and *tⱼ* are dimensional indices in a time sequence, U and S are obtained from the covariance matrix Σ by singular value decomposition, and y is a vector composed of n random variables generated from Σ.

The system example is substantially similar to the method example, so for relevant details, reference can be made to the descriptions of the method example. The system example described above is merely illustrative. The units described as separate components may or may not be physically separated, and the components as units may or may not be physical units, that is, the components may be located in one place, or may be distributed on a plurality of network units. Some or all of the modules may be selected according to actual needs to achieve the objectives of the solutions of the present disclosure.

FIG. 8 is a schematic structural diagram of an electronic device according to an exemplary example of the present disclosure. The electronic device comprises a memory, a processor, and a computer program stored in the memory and configured to run on the processor. The computer program, when being executed by the processor, causes the processor to implement the steer-by-wire variable-steering-ratio design method based on Gaussian regression according to any of the above examples. The electronic device 80 shown in FIG. 8 is merely an example and should not impose any limitation on the function and scope of use of the examples of the present disclosure.

As shown in FIG. 8, the electronic device 80 may be represented in the form of a general-purpose computing device, for example, it may be a server device. Components of an electronic device 80 may comprise, but are not limited to: at least one processor 81, at least one memory 82, and a bus 83 connecting different system components (including the memory 82 and the processor 81).

The bus 83 comprises a data bus, an address bus, and a control bus.

The memory 82 may comprise a volatile memory, such as a random access memory (RAM) 821 and/or a cache memory 822, and may further comprise a read-only memory (ROM) 823.

The memory 82 may further comprise a program tool 825 (or utility) having a set of (at least one) program modules 824. Such program modules 824 include, but are not limited to: an operating system, one or more applications, other program modules and program data, and each or a combination of these examples may include an implementation of network environment.

The processor 81 executes various functional applications and data processing, such as the steer-by-wire variable-steering-ratio design method based on Gaussian regression according to any of the above examples, by running the computer programs stored in the memory 82.

The electronic device 80 may also communicate with one or more external devices 84 (for example, a keyboard, a pointing device, etc.). This communication can be carried out via an input/output (I/O) interface 85. In addition, the electronic device 80 can also communicate with one or more networks (such as a local area network (LAN), a wide area network (WAN), and/or a public network, such as the Internet) via a network adapter 86. As shown, the network adapter 86 communicates with other modules of the electronic device 80 via the bus 83. It should be understood that, although not shown in the figure, other hardware and/or software modules may be used in combination with the electronic device 80, including but not limited to: microcode, device drives, redundant processors, external disk drive arrays, RAID (disk array) systems, tape drives, data backup storage systems, and the like.

It should be noted that, although a plurality of units/modules or subunits/modules of the electronic device are mentioned in the detailed description above, such a division is exemplary and not mandatory. In practice, according to the implementations of the present disclosure, the features and functions of two or more units/modules described above may be embodied in one unit/module. Conversely, the features and functions of one unit/module described above can be further divided and embodied in a plurality of units/modules.

An example of the present disclosure further provides a computer-readable storage medium having a computer program stored thereon, wherein the computer program, when being executed by a processor, causes the processor to implement the steer-by-wire variable-steering-ratio design method based on Gaussian regression according to any of the above examples.

The readable storage medium may include, but is not limited to: a portable disk, a hard disk, a random access memory, a read-only memory, an erasable programmable read-only memory, an optical storage, a magnetic storage, or any suitable combination thereof.

An example of the present disclosure further provides a computer program product, comprising a computer program that, when being executed by a processor, causes the processor to implement the steer-by-wire variable-steering-ratio design method based on Gaussian regression according to any of the above examples.

Program codes for executing the computer program product of the present disclosure may be written in any combination of one or more programming languages, may be entirely or partially executed on a user device, executed as a standalone software package, executed partially on the user device and partially on the remote device or entirely on the remote device.

Although the specific implementations of the present disclosure have been described above, it should be understood by those skilled in the art that these are merely illustrative, and that various changes or modifications can be made to these implementations without departing from the principles and essence of the present disclosure. Accordingly, the scope of protection of the present disclosure is defined by the appended claims.

## Claims

1. A steer-by-wire variable-steering-ratio design method based on Gaussian regression, **characterized in that** the steer-by-wire variable-steering-ratio design method comprises:
establishing a dynamic equation of a steer-by-wire system;
on the basis of the dynamic equation, solving steering ratio curves;
optimizing each steering ratio curve, so as to locally minimize the total open-loop variance of the steering ratio curve, and obtaining steering ratio fitness parameters corresponding to a local optimal solution for each vehicle speed;
using a Gaussian process to perform regression analysis on the steering ratio fitness parameters corresponding to each vehicle speed, so as to obtain a random variable index;
performing Gaussian process kernel regression simulation on the random variable index, so as to obtain a nonlinear parameter model; and
on the basis of the nonlinear parameter model, learning a global optimal solution of a steering ratio.

2. The steer-by-wire variable-steering-ratio design method based on Gaussian regression according to claim 1, **characterized in that** establishing a dynamic equation of a steer-by-wire system comprises:
establishing the dynamic equation of the steer-by-wire system on the basis of a two-degree-of-freedom model;
wherein the dynamic equation is expressed as: $\left({k}_{f}+{k}_{r}\right) β + \frac{1}{u} \left({ak}_{f}-{bk}_{r}\right) {ω}_{r} - {k}_{f} θ = m \left(v′+{uω}_{r}\right) ;$ and $\left(a{k}_{f}-{bk}_{r}\right) β + \frac{1}{u} \left({a}^{2}{k}_{f}+{b}^{2}{k}_{r}\right) {ω}_{r} - {ak}_{f} θ = {I}_{z} {ω}_{r} ;$
wherein k_{f} is a cornering stiffness of a front axle, kᵣ is a cornering stiffness of a rear axle, β is a sideslip angle at a center of mass, *u* is a velocity component in an x-axis direction, a is a front axle distance, b is a rear axle distance, *ωᵣ* is a yaw rate, *θ* is a front-wheel steering angle, *m* is a vehicle mass, *v'* is a differential value of a vehicle driving speed, and *I_{z}* is a moment of inertia.

3. The steer-by-wire variable-steering-ratio design method based on Gaussian regression according to claim 1, **characterized in that** on the basis of the dynamic equation, solving steering ratio curves comprises:
solving a steering ratio curve corresponding to the dynamic equation on the basis of a constant-gain method.

4. The steer-by-wire variable-steering-ratio design method based on Gaussian regression according to claim 3, **characterized in that** solving a steering ratio curve corresponding to the dynamic equation on the basis of a constant-gain method comprises:
on the basis of the dynamic equation, obtaining a yaw-rate equation and a lateral-acceleration equation of the steer-by-wire system;
determining a ratio of the yaw-rate equation to a steering-wheel angle as a steady-state yaw-rate gain equation, and solving a first ideal steering ratio based on a yaw rate while keeping the steady-state yaw-rate gain equation constant;
determining a ratio of the lateral-acceleration equation to the steering-wheel angle as a steady-state lateral-acceleration gain equation, and solving a second ideal steering ratio of an ideal steering ratio based on a lateral acceleration while keeping the steady-state lateral-acceleration gain equation constant; and
on the basis of a weighted result of the first ideal steering ratio and the second ideal steering ratio, determining the steering ratio curve.

5. The steer-by-wire variable-steering-ratio design method based on Gaussian regression according to claim 4, **characterized in that** the yaw-rate equation is expressed as: ${ω}_{r} = \frac{\left(a+b\right) θu {k}_{f} {k}_{r}}{{\left(a+b\right)}^{2} {k}_{f} {k}_{r} - {mu}^{2} \left(a{k}_{f}-b{k}_{r}\right)} ;$
the yaw-rate equation is substituted into a_{y} = *v'* + *uωᵣ,* and the lateral-acceleration equation is obtained as: ${a}_{y} = v ′ + u \frac{\left(a+b\right) θu {k}_{f} {k}_{r}}{{\left(a+b\right)}^{2} {k}_{f} {k}_{r} - {mu}^{2} \left(a{k}_{f}-b{k}_{r}\right)} ;$
the first ideal steering ratio is expressed as: ${I}_{w} = \frac{u / \left(a+b\right)}{\left(1+\frac{m}{{\left(a-b\right)}^{2}}\left(\frac{a}{{k}_{r}}-\frac{b}{{k}_{f}}\right){u}^{2}\right) {K}_{w}} ;$
the second ideal steering ratio is expressed as: ${I}_{a} = \frac{{u}^{2} / \left(a+b\right)}{\left(1+\frac{m}{{\left(a-b\right)}^{2}}\left(\frac{a}{{k}_{r}}-\frac{b}{{k}_{f}}\right){u}^{2}\right) {K}_{ay}} ;$
wherein *K_{w}* denotes a positive calibratable parameter representative of vehicle steering sensitivity, and *K_{ay}* denotes a positive calibratable parameter representative of vehicle driving stability.

6. The steer-by-wire variable-steering-ratio design method based on Gaussian regression according to claim 1, **characterized in that** optimizing each steering ratio curve, so as to locally minimize the total open-loop variance of the steering ratio curve, and obtaining steering ratio fitness parameters corresponding to a local optimal solution comprises:
calculating a total open-loop variance equation of the steering ratio curve according to a dynamic total open-loop variance evaluation method; and
optimizing the steering ratio curve at each vehicle speed using a genetic algorithm with the total open-loop variance equation serving as a fitness function, so as to locally minimize the total open-loop variance thereof and obtain the steering ratio fitness parameters.

7. The steer-by-wire variable-steering-ratio design method based on Gaussian regression according to claim 6, **characterized in that** the total open-loop variance equation is expressed as: ${E}_{r} = \sqrt{\frac{{ω}_{1} {J}_{e 1}^{2} + {ω}_{2} {J}_{e 2}^{2} + {ω}_{3} {J}_{b 1}^{2}}{{ω}_{1} + {ω}_{2} + {ω}_{3}}} ;$ wherein Jₑ₁ is a trajectory-tracking performance index, Jₑ₂ is a direction error index, J_{b1} is a three-item driver-burden index, ω₁ is a weighting coefficient of Jₑ₁, ω₂ is a weighting coefficient of Jₑ₂, and ω₃ is a weighting coefficient of J_{b1}; and Jₑ₂ is obtained on the basis of a radial vehicle driving speed and an X-axis component of the radial vehicle driving speed, and J_{b1} is evaluated on the basis of a heaviness degree of a steering wheel.

8. The steer-by-wire variable-steering-ratio design method based on Gaussian regression according to claim 1, **characterized in that** using a Gaussian process to perform regression analysis on the steering ratio fitness parameters corresponding to each vehicle speed, so as to obtain a random variable index comprises:
using a Gaussian process prior to perform regression analysis on the steering ratio fitness parameters corresponding to each vehicle speed, wherein a random vector X = [x₁, x₂ ... , xₙ] is assumed to follow a multivariate Gaussian distribution X~N(µ, Σ), wherein X₁ = [*x*₁, *... , xₘ*] is an observed vector, and X₂ = [*x*_{*m+*1}, ... , *xₙ*] is the random variable index, such that $X = \left(\begin{matrix}{X}_{1} \\ {X}_{2}\end{matrix}\right)$, thereby obtaining: $μ = \left(\begin{matrix}{μ}_{1} \\ {μ}_{2}\end{matrix}\right) , Σ = \left[\begin{matrix}Σ 11 & Σ 12 \\ Σ 21 & Σ 22\end{matrix}\right]$, wherein n is a feature dimension in a time sequence, x₁, x₂ ... , xₙ are feature samples corresponding to respective dimensions, X follows a normal distribution, µ is a mean vector, and Σ is a covariance matrix; and
performing posterior distribution estimation on X₁ and X₂: µ_{2|1} = *µ*₂ + Σ21Σ11(X₁ - *µ*₁), Σ2|1 = Σ22 - Σ21Σ11Σ12, and obtaining a probability of X₂ and a predicted probability matrix.

9. The steer-by-wire variable-steering-ratio design method based on Gaussian regression according to claim 8, **characterized in that** performing Gaussian process kernel regression simulation on the random variable index, so as to obtain a nonlinear parameter model comprises:
resampling X₂, and performing Gaussian process kernel regression simulation on random variables of the resampled X₂, so as to obtain the nonlinear parameter model; wherein equations of a radial basis function and X in a Gaussian process kernel selection are: $k = {σ}^{2} exp \left(-\frac{{\left|\left|{t}_{i}-{t}_{j}\right|\right|}^{2}}{2 {l}^{2}}\right) , X = μ + U \sqrt{S} y$, wherein *tᵢ* and *tⱼ* are dimensional indices in a time sequence, U and S are obtained from the covariance matrix Σ by singular value decomposition, and y is a vector composed of n random variables generated from Σ.

10. A steer-by-wire variable-steering-ratio design system based on Gaussian regression, **characterized in that** the steer-by-wire variable-steering-ratio design system comprises:
an establishing module configured to establish a dynamic equation of a steer-by-wire system;
a curve solving module configured to, on the basis of the dynamic equation, solve steering ratio curves;
a fitness-parameter calculating module configured to optimize each steering ratio curve so as to locally minimize the total open-loop variance of the steering ratio curve, and to obtain steering ratio fitness parameters corresponding to a local optimal solution for each vehicle speed;
an index calculating module configured to use a Gaussian process to perform regression analysis on the steering ratio fitness parameters corresponding to each vehicle speed, so as to obtain a random variable index;
a model calculating module configured to perform Gaussian process kernel regression simulation on the random variable index, so as to obtain a nonlinear parameter model; and
an optimal-solution solving module configured to, on the basis of the nonlinear parameter model, learn a global optimal solution of a steering ratio.

11. An electronic device, **characterized in that** the electronic device comprises a memory, a processor, and a computer program stored in the memory and configured to run on the processor, wherein the computer program, when being executed by the processor, causes the processor to implement the steer-by-wire variable-steering-ratio design method based on Gaussian regression according to any one of claims 1 to 9.

12. A computer-readable storage medium having a computer program stored thereon, **characterized in that** the computer program, when being executed by a processor, causes the processor to implement the steer-by-wire variable-steering-ratio design method based on Gaussian regression according to any one of claims 1 to 9.

13. A computer program product, **characterized in that** the computer program product comprises a computer program, the computer program, when being executed by a processor, causing the processor to implement the steer-by-wire variable-steering-ratio design method based on Gaussian regression according to any one of claims 1 to 9.
